# EUROPÄISCHE PATENTANMELDUNG

(11) **EP 1 393 876 A1**
(43) Veröffentlichungstag der Anmeldung: **03.03.2004**
(21) Anmeldenummer: 02405722.6
(22) Anmeldetag: 26.08.2002
(51) Int. Cl.: B29C 44/08

(54) **Verfahren zur Herstellung eines Schaumstoffkörpers aus einem thermoplastischen Kunststoff**

(71) Anmelder: Alcan Technology & Management Ltd., 8212 Neuhausen am Rheinfall (CH)
(72) Erfinder: Rakutt, Dietmar, 6330 Charm (CH); Rüger, Heinrich, 6343 Rotkreuz (CH); Gisler, Michael, 6472 Erstfeld (CH)

(57) **Zusammenfassung**

Die Erfindung betrifft ein Verfahren zur Herstellung eines Schaumstoffkörpers aus einem thermoplastischen Kunststoff. Das Verfahren zeichnet sich dadurch aus, dass mittels einer Spritzgiessvorrichtung eine fliessfähige thermoplastische Schmelzmasse (12) erzeugt wird und der Schmelzmasse in der Plastifiziereinheit einer Spritzeinheit (6) unter Druck ein gasförmiges Treibmittel beigemischt wird und die Treibmittel-beladene Schmelzmasse (12) aus der Spritzeinheit (6) in die Werkzeugkavität (11) eines geschlossenen Formwerkzeuges (10) ausgegeben wird. Die Schmelzmasse wird während des gesamten Formfüllvorganges derart unter Druck gehalten, dass ein Schäumen der Schmelzmasse im Formwerkzeug (10) ausbleibt. Die Treibmittel-beladene Schmelzmasse wird nach Abschluss der Formfüllung abgekühlt, zu einem Formrohling verfestigt, entformt und in einem nachfolgenden Verfahrensschritt unter Wärmezufuhr zu einem Schaumstoffkörper geschäumt.

## Beschreibung

Vorliegende Erfindung betrifft ein Verfahren zur Herstellung eines Schaumstoffkörpers aus einem thermoplastischen Kunststoff, gemäss dem Oberbegriff des Anspruchs 1, eine Vorrichtung zur Durchführung des Verfahrens sowie die Verwendung des Verfahrensproduktes.

Es sind Verfahren zur Herstellung von Schaumstoffkörpern aus einem thermoplastischen Kunststoff bekannt, welche sich eines chemischen Schäumverfahrens bedienen. Bei chemischen Schäumverfahren wird ein unter erhöhter Temperatur zersetzbares Treibmittel bzw. Schaumerzeuger mit einem thermoplastischen Harz vermischt. Der Schäumvorgang wird durch Erwärmen des Treibmittels über seine sogenannte Zersetzungstemperatur ausgelöst.

Bei Verwendung eines chemischen Schaumerzeugers können jedoch Zersetzungsrückstände zurückbleiben, wodurch Probleme hinsichtlich Verfärbung, Geruchserzeugung sowie eine Verschlechterung der physikalischen Eigenschaften auftreten können.

Ferner sind auch Gasschäumverfahren bekannt, bei welchen das Treibmittel ein organisches Gas ist, dessen Siedepunkt nicht höher als der Erweichungspunkt des Harzes ist. Das Treibmittel wird unter Druck in das geschmolzene Harz eingeleitet und das mit Treibmittel beladene Gemisch wird nachfolgend in eine Umgebung mit niedrigerem Druck ausgegeben, wodurch der Schäumvorgang eingeleitet wird. Organische Gase können beispielsweise Butan, Pentan oder Dichlordifluormethan (Freon R-12) sein. Ferner werden auch flüchtige organische Flüssigkeiten verwendet.

Bei Gasschäumverfahren, in welchen organische Lösungsmittel mit niedrigem Siedepunkt eingesetzt werden, kann beim Fertigungsprozess Feuer- oder Explosionsgefahr entstehen, was wiederum nachteilig hinsichtlich einer hohen Arbeitssicherheit ist. Treibmittel, welche überdies Fluorchlorkohlenstoff-Verbindungen enthalten belasten die Umwelt, da diese unter anderem für die Zerstörung der Ozonschicht verantwortlich gemacht werden.

Um obgenannte Nachteile bei der Herstellung von Schaumstoffkörpern zu vermeiden, wurden Verfahren entwickelt, bei welchen anorganische Gase als Treibmittel verwendet werden. Diese haben den Vorteil, dass sie keine Lösungsmittel und Rückstände erzeugen bzw. enthalten und überdies giftfrei und umweltfreundlich sind.

So sind z.B. Verfahren bekannt, bei welchen eine thermoplastisches Harz in einem Extruder in einen fliessfähigen Zustand überführt und mit einem anorganischen Gas beladen wird. Der Schäumvorgang wird beim Austritt der gasbeladenen Schmelzmasse aus der Extruderdüse in eine Umgebung niedrigerem Druckes ausgelöst.

Schaumstoffkörper grösseren Querschnitts, wie z.B. quaderförmige Schaumstoffblöcke mit Abmessungen von beispielsweise 120 x 240 x 30 cm werden üblicherweise mittels sogenannten Tauchkantenwerkzeugen hergestellt. Das Verfahren zeichnet sich dadurch aus, dass im besagten Tauchkantenwerkzeug eine schmelzflüssige Kunststoffmasse zubereitet und der Kunststoffmasse ein physikalisches oder chemisches Treibmittel unter Druck beigemischt wird. Die Treibmittel-beladene Kunststoffmasse wird daraufhin zu einem blockförmigen Formrohling abgekühlt, verfestigt und aus dem Tauchkantenwerkzeug entformt. Durch nachfolgendes Erwärmen des Formrohlings, beispielsweise in einem entsprechenden Ofen, wird der Formrohling zu einem Schaumstoffblock expandiert.

Das genannte Verfahren weist den Nachteil auf, dass die Durchmischung der Kunststoffmasse mit dem Treibmittel oftmals ungenügend ist, was zu einer inhomogenen Porenverteilung führt. Ferner eignet sich das genannte Verfahren nicht für physikalische Treibmittel, welche unter Normalbedingungen gasförmig vorliegen.

Aufgabe vorliegender Erfindung ist es daher, ein Verfahren zur Herstellung von grossdimensionalen, massiven Schaumstoffkörpern mit möglichst homogener Porenverteilung aus einem thermoplastischen Kunststoff unter Verwendung eines gasförmigen Treibmittels, insbesondere eines anorganischen Gases, vorzuschlagen.

Erfindungsgemäss wird die Aufgabe dadurch gelöst, dass die Treibmittel-beladene thermoplastische Schmelzmasse in einer Plastifiziereinheit erzeugt und unter Anwendung eines Förderdruckes aus der Plastifiziereinheit in die Kavität eines geschlossenen Formwerkzeuges befördert wird, und Mittel vorgesehen sind, welche während der Formfüllung auf die in das Formwerkzeug geförderte thermoplastische Schmelzmasse einen Gegendruck ausüben, welcher kleiner ist als der Förderdruck, wobei der Förderdruck und der Gegendruck grösser sind als der Schäumungsgrenzdruck, bei dessen Unterschreiten das Treibmittel ein Aufschäumen der thermoplastischen Schmelzmasse bewirkt, und die thermoplastische Schmelzmasse nach Abschluss der Formfüllung zu einem Formrohling verfestigt wird.

Das Einbringen der thermoplastischen Schmelzmasse erfolgt also entgegen dem in der Werkzeugkavität aufgebauten Gegendruck. In zweckmässiger Ausführung sind Mittel vorgesehen, welche die Steuerung des Gegendruckes und/oder des Förderdruckes während des Formfüllvorganges erlauben.

Die Plastifiziereinheit enthält Mittel zur Aufbereitung einer thermoplastischen Schmelzmasse. Diese Mittel umfassen vorzugsweise eine Schnecke.

Das Treibmittel bzw. Schaumerzeuger ist bevorzugt ein unter Normalbedingungen bzw. unter atmosphärischen Bedingungen gasförmig vorliegendes Treibmittel. Der Begriff Normalbedingungen bedeutet hierbei die Normalbedingungen für den physikalischen Normzustand, welcher einer Temperatur von 0°C (Normtemperatur) und einem Druck von 101'325 Pa (Normdruck) entspricht.

Das Treibmittel ist vorteilhaft ein anorganische Gas. Bevorzugte anorganische Gase sind z.B. CO₂ (Kohlendioxid), N₂ (Stickstoff), Luft, Ne (Neon) oder Ar (Argon). Weitere hier nicht genannte und geeignete anorganische Gase sind jedoch ebenfalls möglich. Ferner sind auch Kombinationen zweier oder mehrerer anorganischen Gase, insbesondere der erwähnten Gase, möglich. Besonders bevorzugt wird CO₂ oder CO₂ im Gasgemisch mit einem oder mehreren weiteren anorganischen Gasen als Treibmittel eingesetzt.

Das Treibmittel wird zweckmässig unter Druck der thermoplastischen Schmelzmasse in der Plastifiziereinheit zugegeben.

Die thermoplastische Schmelzmasse wird in der Plastifiziereinheit bevorzugt mit einem Haltedruck, insbesondere einem Staudruck, beaufschlagt, wobei der unter Haltedruck stehenden thermoplastischen Schmelzmasse das gasförmige Treibmittel unter Druck zugeführt wird. Der Haltedruck ist hierbei zweckmässig grösser als der Schäumungsgrenzdruck. Der Schäumungsgrenzdruck ist jener, auf die Schmelzmasse ausgeübte Druck, bei dessen Unterschreiten das Treibmittel das Schäumen der Schmelzmasse, d.h. die Zellbildung, auslöst.

Der Haltedruck in Form eines Staudruckes kann beispielsweise durch die Förderkraft einer in der Plastifiziereinheit angeordneten Schnecke generiert werden.

Die Plastifiziereinheit enthält eine oder mehrere in die Kavität des Formwerkzeuges einmündende Austrittsöffnungen. Zur Aufrechterhaltung des vorgenannten Haltedruckes sowie zur semikontinuierlichen Förderung der thermoplastischen Schmelzmasse in das Formwerkzeug ist bzw. sind die Austrittsöffnungen zweckmässig mit einer bzw. mehreren Verschlussdüsen, z.B. Nadelverschlussdüsen, versehen.

In bevorzugter Ausführung der Erfindung wird die in die Werkzeugkavität des Formwerkzeuges ausgegebene Schmelzmasse nach Abschluss der Formfüllung abgekühlt, vorzugsweise unter deren Glaspunkt abgekühlt, verfestigt, d.h. statisch stabilisiert, und nachfolgend entformt, wobei ein Treibmittel-beladener Formrohling entsteht, welcher unter atmosphärischen Druckbedingungen und Raumtemperatur nicht schäumt bzw. expandiert.

Der Treibmittel-beladene Formrohling wird in einem nachfolgenden Verfahrensschritt unter Erwärmung zu einem Schaumstoffkörper expandiert bzw. relaxiert. Dazu wird der Formrohling bevorzugt in einen entsprechenden Ofen (z.B. Umluftofen) überführt und darin expandiert. Der Schäumvorgang kann frei, d.h. unter atmosphärischen Druckbedingungen, oder geführt unter Druck erfolgen. Der Schäumvorgang kann unter Verwendung von Formwerkzeugen geschehen.

Der Schäumvorgang kann in Weiterentwicklung der Erfindung gemeinsam mit einer nachfolgenden RIM-Verarbeitung (Reaction Injection Moulding), z.B. zur Herstellung von Sandwich-Verbunden, erfolgen. In einer andersartigen Weiterentwicklung der Erfindung können ferner Deckschichten in Form von mit Harz getränkten Laminaten (Prepreg) auf den Formrohling aufgebracht und mit dem Formrohling in situ während des Schäumvorganges zu einem Schichtverbund laminiert werden.

Das Formwerkzeug zur Herstellung des Formrohlings ist zweckmässig mehrteilig, vorzugsweise zweiteilig. Das Formwerkzeug ist vorzugsweise in eine, ein Schliesssystem enthaltende Schliesseinheit eingegliedert, mittels welcher das Formwerkzeug geöffnet und geschlossen wird. Die Schliesseinheit dient ferner zum Aufbringen einer Werkzeugzuhaltekraft sowie zur Durchführung des Entformungsvorganges. Das Schliesssystem kann mechanisch oder hydraulisch betrieben werden.

In einer ersten Durchführung der Erfindung sind Mittel zur Vergrösserung der Werkzeugkavität des Formwerkzeuges während des Formfüllvorganges vorgesehen. Gemäss dieser Erfindungslösung wird die Werkzeugkavität bei fortschreitender Formfüllung vergrössert, wobei das Formwerkzeug während der Formfüllung einen, vorzugsweise permanenten, Gegendruck auf die in die Werkzeugkavität ausgegebene Schmelzmasse ausübt. Der besagte Gegendruck ist hierbei grösser als der Schäumungsgrenzdruck.

In bevorzugter Ausführung ist das Formwerkzeug mehrteilig und enthält wenigstens ein während des Formfüllvorganges bewegliches Formwerkzeugteil, wobei die Werkzeugkavität mittels einer Relativbewegung der Formwerkzeugteile zueinander während des Formfüllvorganges bis zum Erreichen einer definierten Maximalgrösse vergrössert wird. Das oder die beweglichen Formwerkzeugteil(e) üben während des Formfüllvorganges einen Gegendruck auf die in die Werkzeugkavität ausgegebene Schmelzmasse aus, wobei der besagte Gegendruck grösser ist als der Schäumungsgrenzdruck.

Die beweglichen Formwerkzeugteile werden bevorzugt durch hydraulisch arbeitende Mittel betrieben, d.h. bewegt. Diese hydraulisch arbeitenden Mittel werden vorzugsweise durch die Schliesseinheit selbst ausgebildet.

Das Formwerkzeug ist bevorzugt zweiteilig mit einem ersten und einem, relativ zum ersten Formwerkzeugteil, beweglichen zweiten Formwerkzeugteil. Ein solches zweiteiliges Formwerzeug kann beispielsweise ein sogenanntes Tauchkantenwerkzeug sein, wobei ein erstes Formwerkzeugteil als ein in das zweite Formwerkzeugteil eingreifender und relativ zu diesem linear beweglicher Stempel ausgebildet ist.

Das bewegliche Formwerkzeugteil ist vorzugsweise ein in die Werkzeugkavität eingreifender Stempel, wobei der Stempel während des Formfüllvorganges unter Ausführung eines die Werkzeugkavität vergrössernden Öffnungshubes aus der Werkzeugkavität ausgefahren wird. Das Formwerkzeug enthält vorzugsweise eine Distanzeinrichtung, mit welchem sich der Öffnungshub und somit die maximale Kavität auf eine vordefinierte Grösse einstellen lässt.

Die Gegenseitige Abdichtung der Formwerkzeugteile geschieht vorzugsweise durch die Schmelzmasse bzw. deren Erstarrungsprodukt selbst. Dazu werden die Formwerkzeugteile so ausgebildet, dass diese an ihren Kavitätseitigen Kontaktstellen, d.h. an den Tauchkanten bei Tauchkantenwerkzeugen, einen schmalen Zwischenraum in Form eines Spaltes ausbilden, welcher in die Werkzeugkavität mündet. Die Dichtwirkung wird dadurch erzielt, dass beim Formfüllvorgang Schmelzmasse in den Zwischenraum eindringt, diesen ausfüllt und durch den Kontakt zur anliegenden, kühlen Formwerkzeugwand zu einem Grat erstarrt und so ein weiteres Ausfliessen von Schmelzmasse verhindert wird. Das Formwerkzeug wird auf diese Weise durch erstarrende Schmelzmasse selbst gasdicht gemacht. Das oben beschriebene Dichtkonzept eignet sich insbesondere für zweiteilige Formwerkzeuge in der Ausführung eines Tauchkantenwerkzeuges.

In einer zweiten Durchführung der Erfindung sind Mittel zum Aufbau eines Gasüberdruckes in der Werkzeugkavität vorgesehen. Gemäss dieser Erfindungslösung wird in der Werkzeugkavität vor dem Formfüllvorgang ein Gasüberdruck aufgebaut.

Der Gasüberdruck übt während des Formfüllvorganges einen Gegendruck aus, welcher grösser ist als der Schäumungsgrenzdruck, jedoch kleiner als der Förderdruck. Zur Steuerung des Gasüberdruckes kann während des Formfüllvorganges über Ein- oder Auslassventile Gas zu- bzw. weggeführt werden. Dabei wird während des Formfüllvorganges, z.B. mittels Überdruckventilen, zweckmässig Gas aus der Werkzeugkavität ausgelassen, damit der andernfalls mit zunehmender Formfüllung steigende Gasüberdruck im Laufe des Formfüllvorganges nicht den Förderdruck übersteigt.

Das zur Erzeugung eines Gasüberdruckes eingesetzte Gas ist vorzugsweise ein Gas, welches mit der Kunststoffmasse möglichst keine chemische Reaktion eingeht. Das Gas kann z.B. ein anorganisches Gase wie CO₂ (Kohlendioxid), N₂ (Stickstoff), Luft, Ne (Neon) oder Ar (Argon) sein.

Der thermoplastische Kunststoff zeichnet sich vorzugsweise durch sein beim Erwärmen unter Druckentlastung isotropes Aufschäumen aus. Isotropes Aufschäumen bedeutet, dass die Porengeometrie richtungsunabhängig ausgebildet ist.

Der thermoplastische Kunststoff ist daher bevorzugt ein amorpher thermoplastischer Kunststoff. Der thermoplastische Kunststoff kann ein Polyolefin, z.B. Polyethylen, Copolymer oder Polyblend des Ethylens, Polypropylen oder Copolymer oder Polyblend des Polypropylens, ein Styrolpolymerisat, z.B. Polystyrol (PS), Copolymer des Polystyrols sowie Polyblends davon wie Acrylnitril/Butadien/Styrol-Pfropfcopolymer (ABS) oder Styrol/Acrylnitril-Copolymer (SAN), ein halogenhaltiges Polymer, z.B. Polyvinylchlorid (PVC) oder Polyvinylfluorid (PVF), ein Polyester, wie Polycarbonat, ein Polyamid, ein Acrylpolymerisat, wie Poly(methacrylsäuremethylester) (PMMA) oder ein anderer thermoplastischer Kunststoff sein. In bevorzugter Ausführung ist der thermoplastische Kunststoff ein Polyvinylchlorid (PVC).

Das erfindungsgemässe Verfahren wird bevorzugt mittels einer Spritzgiessvorrichtung gemäss den kennzeichnenden Merkmalen des Anspruchs 17 ausgeführt.

Die Spritzgiessvorrichtung setzt sich im wesentlichen aus einer Spritzeinheit und einem an die Spritzeinheit anschliessenden, eine Werkzeugkavität enthaltenden Formwerkzeug zusammen. Das Formwerkzeug wirkt mit einer ein Schliesssystem enthaltenden Schliesseinheit zusammen, welche unter anderem dem Öffnen und Schliessen des Formwerkzeuges dient. Die zusammenwirkenden Teile des Formwerkzeuges und der Spritzeinheit sind zweckmässig druckdicht miteinander verbunden.

Die Spritzeinheit enthält unter anderem eine Plastifiziereinheit zur Aufbereitung einer Treibmittel-beladenen, thermoplastischen Schmelzmasse sowie einen Spritzkopf. Die Treibmittel-beladene, thermoplastische Schmelzmasse wird also mittels Spritzgiessen in das Formwerkzeug eingebracht. Die Spritzgiessvorrichtung enthält ferner Mittel zur Zufuhr eines unter atmosphärischen Bedingungen gasförmigen Treibmittels in die Plastifiziereinheit.

Die Plastifziereinheit enthält zweckmässig eine Schnecke, mittels welcher die thermoplastische Schmelzmasse aufbereitet und homogenisiert, d.h. durchmischt, und gefördert wird. Die Schnecke ist bevorzugt in einem beheizbaren Zylinder angeordnet. Über eine mit der Plastifiziereinheit zusammenwirkenden Einfülleinheit lässt sich das zur Herstellung der thermoplastischen Schmelzmasse notwendige Ausgangsmaterial der Plastifiziereinheit zuführen.

Das Spritzgiessverfahren ist ein diskontinuierliches bzw. semi-kontinuierliches Verfahren. Zur Ausführung des erfindungsgemässen Verfahrens wird ein Ausgangsmaterial über die Einfülleinheit der Plastifiziereinheit zugeführt. Durch Wärmezufuhr wird das Ausgangsmaterial geschmolzen und mittels Schnecke in eine fliessfähige thermoplastische Schmelzmasse überführt und homogenisiert. Die Schmelzmasse wird in der Plastifiziereinheit mit einem Haltedruck, z.B. in Form eines Staudruckes, beaufschlagt und mit einem in die Plastifiziereinheit eingespiesenen Treibmittel beladen, wobei das Treibmittel mittels Schnecke möglichst gleichmässig in die thermoplastische Schmelzmasse eingemischt wird.

Das Einleiten des Treibmittels unter Druck kann mit Hilfe einer Pumpe oder eines Kompressors geschehen. Die Treibmittelzufuhr findet, wie bereits genannt, zweckmässig an jenem Abschnitt der Plastifiziereinheit statt, an welchem die Schmelzmasse unter einem Haltedruck (z.B. Staudruck) steht, wobei der Haltedruck grösser als der Schmäumungsgrenzdruck ist.

Die mit Treibmittel beladene thermoplastische Schmelzmasse wird hernach mittels Schnecke in Richtung Spritzkopf befördert und einem Dosierraum zugeführt und entsprechend der Grösse des herzustellenden Formrohlings dosiert. Die dosierte Schmelzmasse wird nachfolgend mittels einem Kolben über eine oder mehrere Austrittsöffnungen in die Werkzeugkavität des Formwerkzeuges ausgegeben bzw. gespritzt.

Die Schmelzmasse wird hierbei mit einem sogenannten Förderdruck aus dem Dosierraum in die Werkzeugkavität ausgegeben, was dem eigentlichen Spritzgiessen entspricht. Der Dosierraum kann eine der Schnecke vorgelagerte Vorkammer oder ein durch ein Zurückfahren der Schnecke ausgebildeter Schneckenvorraum sein. Der Förderdruck wird zweckmässig durch den auf die dosierte Schmelzmasse wirkender Kolben erzeugt, wobei die Schnecke selbst als Kolben wirken kann.

Der Förderdruck besteht aus dem sogenannten Einspritzdruck, mittels welchem die Schmelzmasse in das Formwerkzeug gespritzt wird. Ferner kann der Förderdruck auch einen Nachdruck beinhalten, der z.B. nach Beendigung des eigentlichen Spritzgiessvorganges zum Ausgleich der Schwindung angewendet wird und so lange andauert, bis die Schmelzmasse am Anschnitt eingefroren ist.

Nach abgeschlossener Formfüllung, wird der Formrohling, vorzugsweise unter die Glaspunkttemperatur, abgekühlt, verfestigt und entformt. Während diese Vorganges kann bereits wieder ein neuer Dosiervorgang beginnen, d.h. ein nächster Füllvorgang vorbereitet werden.

Anstelle einer Spritzgiessvorrichtung kann gegebenenfalls auch eine Extrudiervorrichtung verwendet werden, wobei sich eine solche Vorrichtung durch vergleichsweise hohe Halte- und Förderdrucke auszeichnet.

Das Ausgangsmaterial liegt vorzugsweise in fester Form, insbesondere als Harzzusammensetzung in Granulatform vor. Dem Ausgangsmaterial und/oder der thermoplastischen Schmelzmasse können bedarfsweise Additive wie Verarbeitungshilfmittel, Nukleierungsmittel, Antistatikmittel, Stabilisatoren, Füllstoffe, Oxidationsinhibitoren, Pigmente, Flammschutzmittel und weitere Stoffe beigemischt werden. Ferner können dem Ausgangsmaterial bzw. der Schmelzmasse vor Anwendung eines Haltedruckes bereits chemische oder physikalische Treibmittel zugesetzt werden, wobei das unter Haltedruck der Schmelzmasse zugegebene Treibmittel das Haupttreibmittel bildet.

Der Formrohling ist bevorzugt quaderförmig und der daraus produzierte Schaumstoffkörper ist bevorzugt ein quaderförmiger Schaumstoffblock, dessen Längenund Breitenabmessungen beispielsweise im Bereich von 50 bis 500 cm, insbesondere im Bereich von 100 bis 300 cm liegen und dessen Höhe im Bereich von z.B. 1 bis 100 cm, insbesondere von 3 bis 50 cm liegt.

Der Formrohling und dementsprechend auch der Schaumstoffkörper kann jedoch auch beliebig andere komplexe dreidimensionale Formen aufweisen, wobei sich solche Formen insbesondere bei der Anwendung der zweiten, mit Gasüberdruck arbeitenden Verfahrenslösung, realisieren lassen.

Der Schaumstoffkörper weist vorzugsweise eine geschlossenzellige Porenstruktur auf. Die Rohdichte der nach erfindungsgemässen Verfahren hergestellten Schaumstoffkörper kann beispielsweise im Bereich der Leichtschaumstoffe von 30 bis 200 kg/m³ oder im Bereich der Schwerschaumstoffe von über 200 kg/m³ liegen.

Die nach dem erfindungsgemässen Verfahren hergestellte Schaumstoffkörper können z.B. als Wärmeisolationsmaterialien für Konstruktions- oder Bauzwecke oder für Artikel im Freizeit- und Sportbereich, gegebenenfalls unter Ausführung weiterer Verarbeitungsschritte, verwendet werden. Besonders bevorzugt werden die Schaumstoffkörper als Kernschichten für Sandwich-Verbunde eingesetzt.

Die nach dem erfindungsgemässen Verfahren hergestellte quaderförmigen Schaumstoffkörper werden bevorzugt zu Schaumstoffplatten geschnitten und weiteren Verwendungen bzw. Verarbeitungsschritten zugeführt. Die Schaumstoffplatten können z.B. ein- oder beidseitig mit Deckschichten laminiert werden und so Schichten von Verbundmaterialien ausbilden. Besonders bevorzugt bilden die Schaumstoffplatten Kernschichten von Sandwich-Verbundelementen aus.

Das vorliegende Verfahren und die zur Durchführung des Verfahrens geeignete Vorrichtung ermöglichen die Herstellung von massiven, grossdimensionalen Schaumstoffkörpern unter Verwendung von anorganischen Gasen als Treibmittel, wobei sich die erfindungsgemäss hergestellten Schaumstoffkörper insbesondere durch eine gleichmässige Verteilung der Poren mit isotroper Ausrichtung auszeichnen.

Im folgenden wird die Erfindung beispielhaft und mit Bezug auf die beiliegenden Zeichnungen näher erläutert. Es zeigen:
- Fig. 1:: eine schematische Querschnittsansicht einer erfindungsgemässen Vorrichtung;
- Fig. 2:: eine schematische Querschnittsansicht der erfindungsgemässen Vorrichtung nach Fig. 1 bei fortgeschrittenem Verfahrensverlauf;
- Fig. 3:: eine schematische Querschnittsansicht einer weiteren erfindungsgemässen Vorrichtung;
- Fig. 4:: einen gemäss erfindungsgemässen Verfahren hergestellten Formrohling vor dem Expandieren zu einem Schaumstoffblock.

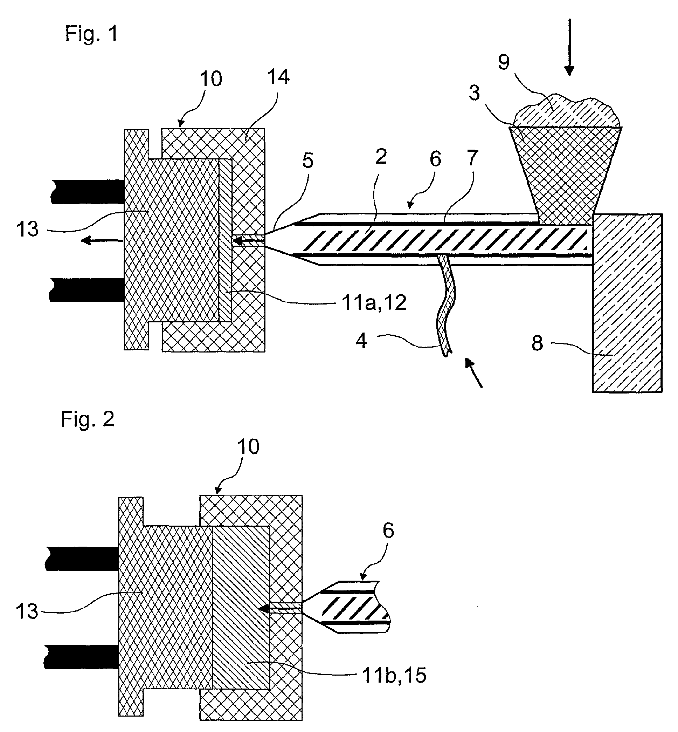

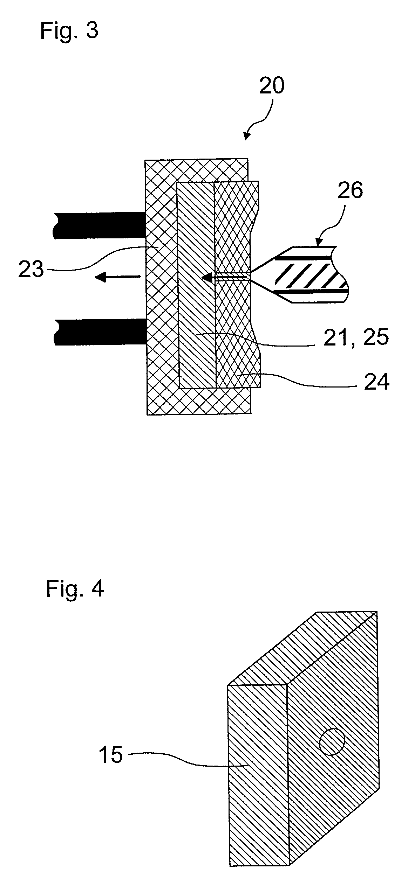

Fig. 1 zeigt eine schematisch dargestellte Spritzgiessvorrichtung zur erfindungsgemässen Herstellung von Treibmittel-beladenen, quaderförmigen Formrohlingen 15 (Fig. 4), aus welchen sich quaderförmige Schaumstoffblöcke fertigen lassen. Die Spritzgiessvorrichtung enthält eine Spritzeinheit 6 sowie ein an die Spritzeinheit 6 angeschlossenes Formwerkzeug 10, welches mit einer Schliesseinheit (nicht gezeigt) zusammenwirkt. Die Spritzeinheit 6 enthält eine Einfülleinheit 3 zur Aufnahme des Ausgangsmaterials 9, eine Plastifiziereinheit mit einer in einem Zylindergehäuse 7 angeordneten Schnecke 2, eine Antriebseinheit 8 zum Antreiben der Schnekke 2, eine Heizung (nicht gezeigt) zum Schmelzen des Ausgangsmaterials 9 in der Plastifiziereinheit sowie einen Spritzkopf 5 mit Austrittsöffnung. Ferner ist an der Plastifiziereinheit eine Treibmittelzufuhreinheit 4 vorgesehen. Die Schnecke 2 dient dem Aufschmelzen, Fördern, Verdichten und Homogenisieren der thermoplastischen Schmelzmasse. Überdies dient die Schnecke 2 dem Einmischen und Verteilen des eingespiesenen gasförmigen Treibmittels in die Schmelzmasse.

Zur Ausführung des erfindungsgemässen Verfahrens wird ein Ausgangsmaterial 9 über die Einfülleinheit 3 der Plastifiziereinheit zugeführt, zu einer thermoplastischen Schmelzmasse geschmolzen und mittels Schnecke homogenisiert und in Richtung Spritzkopf 5 befördert. Über die Treibmittelzufuhreinheit 4 wird ein gasförmiges Treibmittel in die Plastifiziereinheit gespiesen und unter die, durch die Schnecke mit einem Staudruck beaufschlagte Schmelzmasse gemischt.

Die Treibmittel-geladene Schmelzmasse wird mittels Schnecke 2 in Richtung Spritzkopf 5 gefördert, dosiert und über die Austrittsöffnung unter Druck direkt in die quaderförmige Werkzeugkavität 11a des Formwerkzeuges 10 gespritzt. Der druckvolle Austritt der Schmelzmasse aus der Plastifiziereinheit wird durch eine Verschlussdüse an der Austrittsöffnung gesteuert. Die Spritzgiessvorrichtung kann auch mehrere, Verschlussdüsen enthaltende Austrittsöffnungen aufweisen.

Die zusammenwirkenden Teile des Formwerkzeuges 10 und der Spritzeinheit 6 sind während des Formfüllvorganges druckdicht miteinander verbunden.

Die Werkzeugkavität 11 wird durch ein erstes und zweites Formwerkzeugteil 13, 14 ausgebildet. Das erste Formwerkzeugteil 13 ist in Ausführung eines im zweiten Formwerkzeugteil 14 relativ zu diesem führbaren Stempels ausgebildet, wodurch sich die Grösse der Werkzeugkavität 11 verändern lässt. Der Stempel 13 ist hierzu einem Schliesssystem zugeordnet (nicht gezeigt), welches Teil der Schliesseinheit ist. Der Stempel 13 wird mittels Schliessystem während des Formfüllvorganges unter Ausübung eines Öffnungshubes relativ zum zweiten Formwerkzeugteil 14 bewegt, wobei während des Formfüllvorganges mit der Schliesseinheit über den Stempel ein permanenter Gegendruck bzw. Zuhaltedruck auf die in die Werkzeugkavität 11 gespritzte Schmelzmasse 12 ausgeübt wird.

Zu Beginn des Spritzgiessvorganges ist der Stempel 13 unter Ausbildung einer Werkzeugkavität 11a von definierter Minimalgrösse in das zweite Formwerkzeugteil 14 eingefahren. Nach Beginn des Spritzgiessvorganges und mit zunehmendem Füllgrad der Werkzeugkavität 11 wird der Stempel 13 unter Vergrösserung der Werkzeugkavität 11b (siehe Fig. 2) bis zum Erreichen einer definierten Maximalgrösse aus dem zweiten Formwerkzeugteil 14 zurückgefahren. Die Vergrösserung der Werkzeugkavität 11a,b erfolgt unter Aufrechterhaltung eines Gegendruckes auf die ausgegebene Schmelzmasse 12 in der Werkzeugkavität 11a,b, wobei der erzeugte Gegendruck kleiner ist als der Förderdruck und grösser ist als der Schäumungsgrenzdruck, so dass das vorzeitige Schäumen der Treibmittel-beladenen Schmelzmasse bis zu deren Erstarren zum Formrohling verhindert wird.

Nach Abschluss des Spritzgiessvorganges, d.h. nach Erreichen der maximalen Formfüllung, wird die Schmelzmasse abgekühlt und zu einem Formrohling 15 verfestigt und dieser entformt. Der Formrohling 15 wird in einem nachfolgenden Verfahrensschritt unter Wärmezufuhr zu einem Schaumstoffblock geschäumt (nicht gezeigt).

Fig. 3 zeigt eine schematisch Darstellung einer weiteren Spritzgiessvorrichtung zur erfindungsgemässen Herstellung von Treibmittel-beladenen Formrohlingen 15. Die Spritzgiessvorrichtung enthält eine Spritzeinheit 26 sowie ein Formwerkzeug 20. Die Spritzgiessvorrichtung unterscheidet sich von derjenigen gemäss Fig. 1 und 2 lediglich dadurch, dass das auf der Seite der Spritzeinheit 26 angeordnete zweite Formwerkzeugteil 24 als ein in ein erstes Formwerkzeugteil 23 eingreifender Stempel ausgebildet ist und die Austrittsöffnung der Spritzeinheit 26 aufnimmt. Das erste Formwerkzeugteil 23 ist dem Schliessystem (nicht gezeigt) zugeordnet, mittels welchem sich das erste Formwerkzeugteil 23 während des Formfüllvorganges unter Ausübung eines Öffnungshubes relativ zum zweiten Formwerkzeugteil 24 bewegen lässt, wobei während des Formfüllvorganges mit dem Schliesssystem über das erste Formwerkzeugteil 23 ein Gegendruck bzw. Zuhaltedruck auf die in die Werkzeugkavität 21 gespritzte Schmelzmasse 25 ausgeübt wird.

## Patentansprüche

1. Verfahren zur Herstellung eines Schaumstoffkörpers aus einem thermoplastischen Kunststoff, wobei eine Treibmittel-beladene, thermoplastische Schmelzmasse erzeugt und in ein Formwerkzeug überführt und zu einem Formrohling verfestigt wird, und der Formrohling entformt und unter Erwärmung zu einem Schaumstoffkörper geschäumt wird,
**dadurch gekennzeichnet, dass**
die Treibmittel-beladene, thermoplastische Schmelzmasse (12) in einer Plastifiziereinheit erzeugt und unter Anwendung eines Förderdruckes aus der Plastifiziereinheit in die Kavität (11) eines geschlossenen Formwerkzeuges (10) befördert wird, und Mittel vorgesehen sind, welche während der Formfüllung auf die in das Formwerkzeug (10) geförderte thermoplastische Schmelzmasse (12) einen Gegendruck ausüben, welcher kleiner ist als der Förderdruck, wobei der Förderdruck und der Gegendruck grösser sind als der Schäumungsgrenzdruck, bei dessen Unterschreiten das Treibmittel ein Aufschäumen der thermoplastischen Schmelzmasse bewirkt, und die thermoplastische Schmelzmasse nach Abschluss der Formfüllung zu einem Treibmittel-beladenen Formrohling (15) verfestigt wird.

2. Verfahren nach Anspruch 1, wobei das Treibmittel ein unter atmosphärischen Bedingungen gasförmiges Treibmittel ist.

3. Verfahren nach einem der Ansprüche 1 bis 2, wobei das Treibmittel ein anorganisches Gas, vorzugsweise CO₂ oder N₂, ist.

4. Verfahren nach einem der Ansprüche 1 bis 3, wobei das Treibmittel in der Plastifiziereinheit der Schmelzmasse zugeführt wird.

5. Verfahren nach einem der Ansprüche 1 bis 4, wobei die Schmelzmasse in der Plastifiziereinheit mit einem Haltedruck, insbesondere Staudruck, beaufschlagt wird und der unter Haltedruck stehenden Schmelzmasse ein Treibmittel zugeführt wird, wobei der Haltedruck grösser ist als der Schäumungsgrenzdruck, bei dessen Unterschreiten das Treibmittel das Schäumen der Schmelzmasse bewirkt.

6. Verfahren nach einem der Ansprüche 1 bis 5, wobei die Schmelzmasse (12) im Formwerkzeug (10) nach Abschluss der Formfüllung unter Ausbildung eines Formrohlings (15) abgekühlt, verfestigt und der Formrohling (15) anschliessend entformt wird.

7. Verfahren nach Anspruch 6, wobei der entformte Formrohling (15) durch Wärmezufuhr, vorzugsweise unter atmosphärischen Druckverhältnissen, zu einem Schaumstoffkörper geschäumt wird.

8. Verfahren nach einem der Ansprüche 1 bis 7, wobei Mittel zur Vergrösserung der Werkzeugkavität (11) des Formwerkzeuges (10) während des Formfüllvorganges vorgesehen sind, und die Werkzeugkavität (11) bei fortschreitender Formfüllung vergrössert wird, wobei das Formwerkzeug (10) während der Formfüllung einen Gegendruck auf die in die Werkzeugkavität (11) ausgegebene Schmelzmasse ausübt.

9. Verfahren nach einem der Ansprüche 1 bis 8, wobei das Formwerkzeug (10) mehrteilig, vorzugsweise zweiteilig, ist und wenigstens ein bewegliches Formwerkzeugteil (13) enthält, wobei die Werkzeugkavität mittels einer Relativbewegung des oder der beweglichen Formwerkzeugteile (13) gegenüber dem oder den anderen Formwerkzeugteilen (14) während des Formfüllvorganges vergrössert wird, und das oder die beweglichen Formwerkzeugteile (13) während des Formfüllvorganges ein Gegendruck auf die in die Werkzeugkavität (11) ausgegebene Schmelzmasse (12) ausüben.

10. Verfahren nach Anspruch 9, wobei das Formwerkzeug ein erstes und zweites Formwerkzeugteil (13, 14) enthält und das erste Formwerkzeugteil (13) als ein in das zweite Formwerkzeugteil (14) eingreifender Stempel ausgebildet ist, und die beiden Formwerkzeugteile (13, 14) unter Ausführung eines die Werkzeugkavität (11) vergrössernden Öffnungshubs relativ zueinander bewegt werden.

11. Verfahren nach Anspruch 10, wobei das erste, als Stempel ausgebildete Formwerkzeugteil (13) beweglich ist und während des Formfüllvorganges aus der Werkzeugkavität (11) zurückgefahren wird und gleichzeitig einen Gegendruck auf die in die Werkzeugkavität (11) ausgegebene Schmelzmasse (12) ausübt.

12. Verfahren nach einem der Ansprüche 1 bis 11, wobei in der Werkzeugkavität (11) ein Gasüberdruck aufgebaut wird und die thermoplastische Schmelzmasse mittels Förderdruck aus der Plastifiziereinheit in die Werkzeugkavität (11) gefördert wird, wobei der Gasüberdruck auf die Schmelzmasse einen Gegendruck ausübt, welcher kleiner ist als der Förderdruck.

13. Verfahren nach Anspruch 12, wobei der Gasüberdruck in der Werkzeugkavität (11) während des Formfüllvorganges durch Mittel zur Gaszufuhr und Gasabfuhr, vorzugsweise Ein- und Auslassventile, gesteuert wird.

14. Verfahren nach einem der Ansprüche 12 bis 13, wobei während des Formfüllvorganges zur Steuerung des Gasüberdruckes, Gas mittels Ventilen, insbesondere mittels Überdruckventilen, aus der Werkzeugkavität abgelassen wird.

15. Verfahren nach einem der Ansprüche 1 bis 14, wobei die Werkzeugkavität (11), der Formrohling (15) und der aus diesem hergestellte Schaumstoffkörper quaderförmig sind.

16. Verfahren nach Anspruch 15, wobei der quaderförmige Schaumstoffkörper zu Schaumstoffplatten geschnitten wird.

17. Vorrichtung zur Herstellung von Schaumstoffkörpern nach dem Verfahren gemäss Anspruch 1 bis 16,
**dadurch gekennzeichnet, dass**
die Vorrichtung eine Spritzgiessvorrichtung mit einer Spritzeinheit (6), enthaltend eine Plastifiziereinheit zur Aufbereitung einer Treibmittel-beladenen thermoplastischen Schmelzmasse (12), einem an die Spritzeinheit (6) anschliessenden Formwerkzeug (10) und einer mit dem Formwerkzeug (10) zusammenwirkenden Schliesseinheit, umfasst und die Spritzgiessvorrichtung Mittel enthält, welche während des Formfüllvorganges auf die in das Formwerkzeug (10) geförderte thermoplastische Schmelzmasse einen Gegendruck ausüben.

18. Vorrichtung nach Anspruch 17, wobei Mittel (4) zur Zufuhr eines gasförmigen Treibmittels in die Plastifiziereinheit der Spritzeinheit (6) vorgesehen sind.

19. Vorrichtung nach einem der Ansprüche 17 bis 18, wobei die Vorrichtung Mittel zur Veränderung der Grösse der Werkzeugkavität (11) während des Formfüllvorganges enthält, welche erlauben die Werkzeugkavität (11) während des Formfüllvorganges fortlaufend zu vergrössern, wobei während des Formfüllvorgangs durch das Formwerkzeug (10) ein Gegendruck auf die in die Werkzeugkavität (11) ausgegebene Schmelzmasse (12) ausgeübt wird.

20. Vorrichtung nach einem der Ansprüche 17 bis 19, wobei das Formwerkzeug (10) mehrteilig ist und wenigstens ein bewegliches Formwerkzeugteil (13) enthält, mit welchem sich ein die Werkzeugkavität (11) vergrössernder Öffnungshub erzeugen lässt, wobei während des Formfüllvorgangs durch das bewegliche Formwerkzeugteil (13) ein Gegendruck auf die in die Werkzeugkavität (11) ausgegebene Schmelzmasse (12) ausgeübt wird.

21. Vorrichtung nach einem der Ansprüche 17 bis 20, wobei das Formwerkzeug (10) ein erstes und zweites Formwerkzeugteil (13, 14) enthält und das erste Formwerkzeugteil (13) ein in die Werkzeugkavität (11) des zweiten Formwerkzeugteils (14) eingreifender Stempel ist, und das erste und zweite Formwerkzeugteil (13, 14) relativ zueinander verschiebbar angeordnet sind, so dass die Grösse der Werkzeugkavität (11) durch eine Relativbewegung der beiden Formwerkzeugteile (13, 14) zueinander verändert werden kann.

22. Vorrichtung nach Anspruch 21, wobei der Stempel während des Formfüllvorganges unter Vergrösserung der mit der Schmelzmasse fortlaufend gefüllten Werkzeugkavität (11) bis Erreichen einer definierten Maximalgrösse aus dem zweiten Formwerkzeugteil (14) zurückfahrbar ist.

23. Vorrichtung nach einem der Ansprüche 17 bis 22, wobei die Vorrichtung zur Ausübung eines Gegendruckes auf die Schmelzmasse Mittel zum Aufbau eines Gasüberdruckes in der Werkzeugkavität und Mittel zur Steuerung des Gasüberdruckes durch Gaszufuhr und Gasabfuhr während des Formfüllvorganges enthält.

24. Vorrichtung nach Anspruch 23, wobei die Vorrichtung Einlass- und Auslassventile zum Einlass und Auslass von Gas in die oder aus der Werkzeugkavität enthält.

25. Vorrichtung nach einem der Ansprüche 17 bis 24, wobei Mittel zur Erfassung des Gegendruckes und/oder des Förderdruckes sowie Mittel zur Steuerung des Gegendruckes und/oder des Förderdruckes während des Formfüllvorganges vorgesehen sind.

26. Verwendung der Schaumstoffkörper hergestellt nach dem Verfahren gemäss Anspruch 1 bis 17 zur Fabrikation von Schaumstoffkernen von Sandwich-Verbundelementen.
